# EUROPÄISCHE PATENTSCHRIFT

(11) **EP 1 674 770 B1**
(45) Veröffentlichungstag und Bekanntmachung des Hinweises auf die Patenterteilung: **11.04.2007**
(21) Anmeldenummer: 04030368.7
(22) Anmeldetag: 21.12.2004
(51) Int. Cl.: F16J 15/08

(54) **Metallische Flachdichtung**
Flat metal gasket
Joint métallique plat

(43) Veröffentlichungstag der Anmeldung: 28.06.2006
(73) Patentinhaber: REINZ-Dichtungs-GmbH, 89233 Neu-Ulm (DE)
(72) Erfinder: Göttler, Andreas, 89079 Ulm (DE)
(74) Vertreter: Tomerius, Isabel

(56) Entgegenhaltungen:
- EP-A- 0 937 924
- DE-A1- 4 142 600
- DE-A1- 10 009 902
- US-A- 4 721 315
- US-A- 4 759 556

## Beschreibung

Die Erfindung betrifft eine metallische Flachdichtung mit wenigstens einer Dichtungslage, in der wenigstens eine Durchgangsöffnung vorhanden ist, die von einem Abdichtbereich umgeben ist, in dem Dichtelemente zum Abdichten der Durchgangsöffnung angeordnet sind. Insbesondere betrifft die Erfindung eine lediglich einlagige metallische Flachdichtung, die sich vor allem als Zylinderkopfdichtung eignet.

Um eine zuverlässige Abdichtung zu erzielen, ist es im Allgemeinen notwendig, im Bereich um die abzudichtende Durchgangsöffnung herum eine möglichst gleichmäßige Flächenpressung zu erreichen. Wird die Flachdichtung zwischen den beiden abzudichtenden Gegenflächen eingespannt, wirken die Kräfte beim Anziehen der Befestigungsmittel wie beispielsweise Schrauben hauptsächlich in diejenigen Bereiche ein, die den Befestigungsmitteln benachbart sind. Mit zunehmender Entfernung von den Schraubenöffnungen nimmt die Flächenpressung dagegen ohne zusätzliche Maßnahmen ab. Weitere Schwierigkeiten ergeben sich, wenn die abzudichtenden Gegenflächen im Bereich um die Durchgangsöffnungen unterschiedliche Bauteilsteifigkeiten aufweisen. Im Falle eines Verbrennungsmotors beispielsweise sind häufig diejenigen Bereiche um die Brennräume, die zu den längsseitigen Rändern des Motorblocks hin liegen, steifer als diejenigen Bereiche, die sich zwischen benachbarten Brennräumen befinden. Ebenso führen Durchtritte im Wassermantelbereich zur partiellen Reduzierung der Bauteilsteifigkeit. Hier für eine dauerhafte, gleichmäßige Abdichtung zu sorgen, hat sich vor allem bei lediglich einlagigen Zylinderkopfdichtungen oder solchen Zylinderkopfdichtungen als schwierig erwiesen, in denen die Dichtelemente für die Brennraumöffnungen in einer einzigen Dichtungslage angeordnet sind.

Zur Lösung dieses Problems sind im Stand der Technik verschiedene Lösungsansätze vorgeschlagen worden. Ein erster Vorschlag besteht darin, die weicheren Bereiche des Motors zu härten, um auf diese Weise einen gleichmäßig steifen Untergrund für die Zylinderkopfdichtung zur Verfügung zu stellen. Dies bedeutet jedoch einen erhöhten Aufwand und erhöhte Kosten für den Motorenbauer, was nicht erwünscht ist. Im Hinblick auf die Zylinderkopfdichtung selbst ist vorgeschlagen worden, Drahtringe oder Sicken als Dichtelemente zu verwenden, die sich plastisch verformen können. Durch diese plastische Verformung soll eine Anpassung der Zylinderkopfdichtung an die Bauteilgegebenheiten erreicht werden. Stark unterschiedliche Bauteilsteifigkeiten können auf diese Weise jedoch nicht mehr ausgeglichen werden, so dass in solchen Fällen keine gleichmäßige Flächenpressung um die Brennraumöffnungen herum erzielt werden kann. Andererseits ist vorgeschlagen worden, die Blechdicke der Zylinderkopfdichtung entsprechend den vorgefundenen Bauteilsteifigkeiten zu verringern. Dieser Vorschlag führt jedoch zu einem stark erhöhten Fertigungsaufwand und erhöhten Kosten. Auch in diesem Fall sind die Variationsmöglichkeiten in der Praxis oft nicht ausreichend, um in sämtlichen Fällen eine zuverlässige Abdichtung zu erreichen.

In der DE 4142600 A1 ist eine Zylinderkopfdichtung mit einem ringförmigen, massiven, metallischen Brennraumdichtelement vorgeschlagen worden, dessen Breite und/oder Höhe und/oder Härte sich in Umfangsrichtung um eine Brennraumöffnung herum ändert. Die gewünschten Eigenschaften werden durch Fließpressen, Warmfließpressen oder gezielte Härtungsbehandlung unter Verwendung spezieller Werkstoffe und partieller Wärmebehandlung erreicht. Die Behandlung erfolgt dabei derart, dass sich Breite und/oder Höhe und/oder Härte des massiven Brennraumdichtelements in den zwischen den Schraubendurchgangsöffnungen liegenden Zwischenbereichen erhöht. Damit das Brennraumdichtelement eine ausreichende Höhe erreicht, kann es zusätzlich mit einer Sicke versehen werden. Auch diese Sicke kann in Umfangsrichtung um die Brennraumöffnung variieren und zwar derart, dass sie in den Zwischenbereichen verformungssteifer ist als in den Schraubenbereichen bzw. in den den Motorlängsseiten zugewandten Zwischenschraubenbereichen weniger steif ist als in den Zwischenschraubenbereichen zwischen benachbarten Brennräumen. Die Sicke kann auch nur abschnittweise vorhanden sein. Die Herstellung einer derartigen Zylinderkopfdichtung mit Variation sowohl des Brennraumdichtelements als auch der Sicke ist jedoch sehr aufwändig und teuer.

US 4,721,315 offenbart eine Zylinderkopfdichtung, wobei die Breite und die Höhe einer Abdichtungssicke sich in Umfangsrichtung ändern.

Es bestand daher nach wie vor ein Bedarf an einer metallischen Flachdichtung, insbesondere einer Zylinderkopfdichtung, die auch bei starken Unterschieden in den Bauteilsteifigkeiten der abzudichtenden Gegenflächen bei einfachem Aufbau und geringen Fertigungskosten zu einer zuverlässigen Abdichtung führt. Dieses Ziel sollte auch mit einer einlagigen Flachdichtung oder einer solchen Flachdichtung erreicht werden können, bei der die Dichtelemente für die Durchgangsöffnungen, die in Bereichen mit sich ändernden Bauteilsteifigkeiten liegen, in lediglich einer Dichtungslage der Flachdichtung angeordnet sind. **Aufgabe** der Erfindung ist es entsprechend, eine derartige metallische Flachdichtung anzugeben.

Die Lösung dieser Aufgabe gelingt mit der metallischen Flachdichtung gemäß Anspruch 1. Weiterbildungen und bevorzugte Ausführungsformen sind in den Unteransprüchen beschrieben.

Die Erfindung betrifft also eine metallische Flachdichtung mit wenigstens einer Dichtungslage, in der wenigstens eine Durchgangsöffnung vorhanden ist. Die Durchgangsöffnung ist von einem Abdichtbereich umgeben, in dem zu deren Abdichtung Dichtelemente angeordnet sind. Erfindungsgemäß umfasst der Abdichtbereich als Dichtelemente drei Sicken. Eine der Durchgangsöffnung benachbarte innere Sicke verläuft um die Durchgangsöffnung, diese vollständig einschließend, mit einer in Umfangsrichtung im Wesentlichen konstanten Höhe. Auch die äußere Sicke verläuft mit im Wesentlichen gleichbleibender Höhe in sich geschlossen und mit einem Abstand zur inneren Sicke. Zwischen innerer und äußerer Sicke verläuft eine mittlere Sicke, deren Höhe sich in Umfangsrichtung ändert.

Die Höhenänderung der mittleren Sicke verläuft bevorzugt im Wesentlichen kontinuierlich und zweckmäßig so, dass sich Abschnitte reduzierter Höhe mit Abschnitten größerer Höhe abwechseln. Dabei ist es möglich, dass die mittlere Sicke in wenigstens einem Umfangsabschnitt auf eine Höhe von Null reduziert wird. Anders gesagt, kann die mittlere Sicke in wenigstens einem Umfangsbereich um die Durchgangsöffnung herum vollständig auslaufen und in diesem Bereich nicht vorhanden sein.

Die Höhenänderung der mittleren Sicke in Umfangsrichtung wird so vorgegeben, dass sich um die abzudichtende Durchgangsöffnung herum eine möglichst gleichmäßige Flächenpressung einstellt. Dabei ist einerseits insbesondere die Lage der Befestigungsmittel zu berücksichtigen, mit denen die abzudichtenden Bauteile mit der dazwischenliegenden metallischen Flachdichtung gegeneinander gespannt werden. Außerdem sind die Bauteilsteifigkeiten der abzudichtenden Bauteile bei der Höhenverteilung der mittleren Sicke zu beachten. Zweckmäßig kann es beispielsweise sein, die mittlere Sicke in denjenigen Bereichen, die den die Durchgangsöffnung umgebenden Öffnungen für Befestigungsmittel besonders nahe sind, mit geringerer Höhe auszubilden als in denjenigen Bereichen in Umfangsrichtung, die von den Befestigungsmittelöffnungen weiter entfernt liegen. Der Übergang zwischen Abschnitten reduzierter Höhe und solchen größerer Höhe kann dabei bevorzugt fließend erfolgen, wobei die Höhenänderung kontinuierlich so erfolgt, dass eine möglichst gleichmäßige Flächenpressung in Umfangsrichtung um die Durchgangsöffnung erhalten wird.

Zusätzlich oder alternativ zur Änderung der Höhe der mittleren Sicke in Abhängigkeit von der Entfernung zu den Befestigungsmitteln kann die Höhenänderung auch in Abhängigkeit von den Bauteilsteifigkeiten der abzudichtenden Bauteile in den Bereichen um die Durchgangsöffnung herum eingestellt werden. Die mittlere Sicke ist dabei in denjenigen Bereichen mit größerer Höhe vorhanden, in denen die abzudichtende Fläche besonders weich ist. Je weicher die abzudichtende Gegenfläche, desto höher wird zweckmäßig die mittlere Sicke 7 eingestellt. Wie schon im Falle der Höhenänderung in Abhängigkeit von der Entfernung der Befestigungsmittel kann auch im Falle der Einstellung der Sicke auf die Bauteilsteifigkeit die Höhenänderung der mittleren Sicke kontinuierlich erfolgen. Dort, wo die metallische Flachdichtung besonders steifen Bauteilabschnitten gegenüber zu liegen kommt, kann die mittlere Sicke gegebenenfalls auch überhaupt nicht vorhanden sein. In derartigen Fällen läuft die mittlere Sicke nur abschnittweise um die Durchgangsöffnung um. Erneut werden Sickenhöhe und Höhenänderung zweckmäßig wieder so eingestellt, dass sich eine gleichmäßige Flächenpressung um die abzudichtende Durchgangsöffnung herum ergibt.

Weist die erfindungsgemäße metallische Flachdichtung mehr als nur eine Durchgangsöffnung auf, die mit dem Sickenpaket aus drei Sicken abgedichtet werden soll, kann die mittlere Sicke zweckmäßig mit einem Abschnitt größerer Höhe im Bereich zwischen zwei benachbarten Durchgangsöffnungen vorhanden sein. Dies ist vorteilhaft, wenn, wie häufig, diese Bereiche der abzudichtenden Bauteile zwischen benachbarten Durchgangsöffnungen eine geringere Bauteilsteifigkeit aufweisen als beispielsweise diejenigen Bereiche von der Öffnung zum Rand des abzudichtenden Bauteils hin. Hier sorgt dann die Anordnung der mittleren Sicke im Stegbereich zwischen benachbarten Öffnungen mit einer relativ großen Höhe sorgt für eine stärkere Pressung in diesem Bereich und damit für eine bessere Abdichtung.

Durch die erfindungsgemäße Anordnung von drei Sicken als Dichtelemente im Abdichtbereich um eine Durchgangsöffnung herum lässt sich eine deutlich verbesserte Kraftaufnahme im Vergleich zu Dichtungen des Standes der Technik erreichen. Diese wiederum erlaubt es, als Material für die Dichtungslage, in der die drei Sicken ausgebildet sind, ein vergleichsweise preiswertes Material zu verwenden. Beispielsweise ist die Verwendung teuren Federstahls in der Regel nicht erforderlich, wenn auch gleichwohl möglich.

Ein weiterer Kostenvorteil gegenüber bekannten Dichtungen ergibt sich daraus, dass die Einstellung der erfindungsgemäßen metallischen Flachdichtung für eine Vergleichmäßigung der Flächenpressung in Umfangsrichtung um die Öffnung lediglich durch geeignete Ausgestaltung der drei Sicken erfolgt. Weder ist es notwendig, das Material der Dichtungslage im Abdichtbereich um die Durchgangsöffnung herum abschnittsweise einer Härtungsbehandlung zu unterziehen, noch müssen gezielt abschnittsweise Materialverdünnungen oder Materialverdickungen erzeugt werden. So weist der Abdichtbereich, in dem die drei Sicken angeordnet sind, zumindest in dem Bereich außerhalb der Sicken eine im Wesentlichen konstante Dicke auf. Grundsätzlich könnte man sogar sagen, dass der gesamte Abdichtbereich eine konstante Materialdicke aufweist, wenn man einmal davon absieht, dass sich beim Einformen der Sicken in das Material geringfügige Dickenänderungen ergeben können. Im Unterschied zum Stand der Technik findet jedoch keinerlei gezielte Materialverdünnung oder Materialverdickung in diesem Bereich statt, die dazu dienen soll, eine Vergleichmäßigung der Flächenpressung in Umfangsrichtung um die Durchgangsöffnung zu erreichen. Erfindungsgemäß wird dieses Ziel vielmehr durch Anpassung der Sickengeometrie erreicht.

Der Abdichtbereich, welcher die drei Sicken enthält und die Durchgangsöffnung umgibt, kann unmittelbar in die Dichtungslage eingeformt werden und besteht entsprechend aus demselben Material wie diese. Andererseits ist es ebenfalls möglich, den Abdichtbereich als Einlagering zu fertigen, der nach seiner Fertigstellung in eine die abzudichtende Durchgangsöffnung umfassende, größere Durchgangsöffnung in der Dichtungslage eingesetzt und gegebenenfalls an dieser befestigt wird. Letztere Variante hat den Vorteil, dass der Einlagering separat und aus einem anderen Material als die übrige Dichtungslage hergestellt werden kann.

Die Sicken können auf an sich bekannte Weise in den Abdichtbereich eingeformt werden. Zweckmäßig werden die Sicken eingeprägt, bevorzugt alle in ein und demselben Arbeitsgang. Durch das Einformen der Sicken kann sich gegebenenfalls durch Scherung des Materials eine gewisse Materialveränderung ergeben. Dies hat aber nichts mit einer gezielten Härtungsbehandlung zu tun, wie sie in der DE 4142600 A1 beschrieben wird.

Die gezielte Einstellung der Flächenpressung in Umfangsrichtung um eine Durchgangsöffnung kann erfindungsgemäß allein durch Variation der Höhe der mittleren Sicke sehr genau und effektiv eingestellt werden. Eine weitere Feinabstimmung kann durch Variation weiterer Sickeneigenschaften erreicht werden. Beispielsweise können Sickensteilheit und/oder Sickenbreite eingestellt und gegebenenfalls auch in Umfangsrichtung um die Durchgangsöffnung herum variiert werden. Gleiches gilt für die Sickenform. Eine zunehmende Steilheit und verringerte Sickenbreite führen zu einer erhöhten Sickenhärte und Pressung, während runde Sicken im Allgemeinen weicher sind als eckige und eine geringere Pressung erzeugen. In einer bevorzugten Variante erfolgt die Anpassung an die Bauteilgegebenheiten nur über eine Variation der Höhe der mittleren Sicken bei gleichbleibender Breite der mittleren Sicke und auch der beiden anderen Sicken. Der Abdichtbereich, der die drei Sicken enthält, weist somit eine konstante Breite auf.

Die innere und die äußere Sicke im Abdichtungsbereich verlaufen bevorzugt im Wesentlichen konzentrisch zueinander, wobei der Mittelpunkt der abzudichtenden Durchgangsöffnung in der Regel auch der Mittelpunkt von innerer und äußerer Sicke sein wird. Vorzugsweise verlaufen sämtliche Sicken in Form eines Kreisrings, wobei die mittlere Sicke, wie erwähnt, in Umlaufrichtung auch unterbrochen sein kann. Bevorzugt weisen innere und äußere Sicke einen in Umfangsrichtung im Wesentlichen konstanten Abstand zueinander auf. Dieser Abstand ist zweckmäßig größer als die jeweilige Breite der inneren und der äußeren Sicke, wobei unter der Sickenbreite der Abstand zwischen den beiden Sickenfüßen zu verstehen ist, also den Punkten, an denen die Sicke aus der umgebenden Dichtungsebene heraus aufzusteigen beginnt. Die Einhaltung eines derartigen Abstandes schafft für die mittlere Sicke einen hinreichenden Arbeitsbereich, in dem sie durch die umgebende innere und äußere Sicke nicht beeinträchtigt wird. Die Höhen von innerer und äußerer Sicke sind bevorzugt gleich, und die Maximalhöhe der mittleren Sicke geht zweckmäßig nicht über diese Höhe hinaus.

Zusätzlich zu der beschriebenen makroskopischen Anpassung der als Dichtelemente verwendeten Sicken an die vorgefundenen Eigenschaften der abzudichtenden Bauteile kann die erfindungsgemäße metallische Flachdichtung auch eine mikroskopische Anpassung an diese Bauteile ermöglichen. Diese geschieht bevorzugt dadurch, dass wenigstens eine der drei Sicken des erfindungsgemäßen Sickenpakets zumindest bereichsweise plastisch verformbar ausgebildet ist. Derartige Maßnahmen sind im Stand der Technik grundsätzlich bereits bekannt und im Allgemeinen geeignet, Abweichungen aus der idealen, hypothetischen Dichtungsebene von bis zu 20 µm auszugleichen. Die plastische Verformbarkeit kann einerseits durch die Form der Sicke, andererseits durch eine geeignete Materialwahl sichergestellt werden. Wie bereits erwähnt, setzt die erfindungsgemäße metallische Flachdichtung nicht die Verwendung besonders federelastischer Materialien für die Dichtungslage voraus. Vielmehr können auch kostengünstigere und weniger federharte Materialien eingesetzt werden. Bevorzugt wird der Abdichtbereich, der das erfindungsgemäße Sickenpaket enthält, aus Kohlenstoffstahl oder Edelstahl gefertigt. Diese Materialien sind, verglichen mit Federstahl, relativ weich und plastisch daher besser verformbar. Besonders bevorzugt als Materialen der Dichtungslage und/oder des Einlagerings sind solche, die eine Zugfestigkeit nach DIN EN 10002, Teil 1, im Bereich von 300 bis 750 N/mm² aufweisen.

In ihrer einfachsten Ausführungsform betrifft die Erfindung eine metallische Flachdichtung mit lediglich einer einzigen Dichtungslage. Es ist jedoch ebenfalls möglich, weitere Dichtungslagen innerhalb der metallischen Flachdichtung anzuordnen. In derartigen Fällen ist es jedoch bevorzugt, wenn sämtliche Sickenpakete mit drei Sicken, die zum Abdichten verschiedener Durchgangsöffnungen verwendet werden, sich nur in einer einzigen Dichtungslage befinden und nicht auf mehrere Dichtungslagen verteilt sind. Besonders bevorzugt sind für diese Art von Durchgangsöffnung außer den drei Sicken (innerer, mittlerer und äußerer Sicke) keinerlei weitere Dichtelemente zu deren Abdichtung vorhanden. Unter Dichtelementen sollen dabei alle im Stand der Technik üblichen Dichtelemente verstanden werden, also nicht nur Sicken, sondern beispielsweise auch Falze, Bördel, Dichtelemente in Form von Materialverdickungen, Elastomerraupen oder ähnliches. Enthält die erfindungsgemäße metallische Flachdichtung jedoch weitere Durchgangsöffnungen, die nicht von den beschriebenen drei Sicken abgedichtet werden, sondern eine andere Abdichtungseinrichtung haben, ist es möglich, diese Abdichtungseinrichtung in derselben Lage wie das Sickenpaket oder in einer oder mehreren zusätzlichen Dichtungslagen anzuordnen. Beispielsweise kann eine weitere Dichtungslage mit Bereichen zur Aufnahme so genannter Inserts versehen sein, beispielsweise ringförmiger, dichtender Einlagen zur Abdichtung weiterer Öffnungen innerhalb der metallischen Flachdichtung. Im Übrigen können weitere Dichtungslagen in an sich bekannter Weise zur Dickenanpassung der metallischen Flachdichtung verwendet werden. Derartige so genannte Distanzlagen weisen üblicherweise keinerlei Elemente mit Dichtfunktion auf.

Die erfindungsgemäße metallische Flachdichtung kann in einer Vielzahl von Einsatzgebieten verwendet werden. Besonders eignet sich die metallische Flachdichtung als Zylinderkopfdichtung, insbesondere als Zylinderkopfdichtung zum Abdichten in einem Verbrennungsmotor mit über die Dichtfläche stark wechselnden Bauteilsteifigkeiten. Die Brennraumöffnungen werden dabei jeweils durch die vorstehend beschriebene Dreifachsicke abgedichtet. Die übrigen Öffnungen der Dichtung, wie beispielsweise Wasser- und Ölöffnungen, können auf im Stand der Technik bekannte Art und Weise abgedichtet werden. Dabei können metallische Dichtelemente wie Sicken genauso wie Dichtelemente aus elastomerem Kunststoff oder Weichstoff zum Einsatz kommen. Zusätzlich kann die erfindungsgemäße metallische Flachdichtung auf wenigstens einer ihrer Oberflächen zumindest bereichsweise mit einer Beschichtung zur Verbesserung der Mikroabdichtung und/oder einer gleitfähigen Beschichtung versehen sein. Auch hier kommen grundsätzlich alle bereits aus dem Stand der Technik bekannten Beschichtungsmaterialien in Betracht.

Die Erfindung soll nachfolgend am Beispiel von Zylinderkopfdichtungen mit mehreren Brennräumen anhand von Zeichnungen näher erläutert werden. Dabei zeigen schematisch:
- Fig. 1: ein erstes Beispiel einer erfindungsgemäßen Zylinderkopfdichtung in Teildraufsicht;
- Fig. 2: einen Querschnitt entlang der Linie A-A der Figur 1;
- Fig. 3: einen Querschnitt entlang der Linie B-B der Figur 1;
- Fig. 4: einen Querschnitt entlang der Linie C-C der Figur 1;
- Fig. 5: eine Teildraufsicht auf ein zweites Ausführungsbeispiel einer erfindungsgemäßen Zylinderkopfdichtung und
- Fig. 6: einen Querschnitt entlang der Linie C-C in Figur 5.

Die Figuren dienen lediglich der Erläuterung einiger bevorzugter Beispiele einer erfindungsgemäßen Flachdichtung, ohne dass die Erfindung jedoch auf diese Beispiele beschränkt wäre. Abweichungen von diesen spezifischen Ausführungsformen sind möglich und ergeben sich für den Fachmann ohne Weiteres aus dem Offenbarungsgehalt dieser Anmeldung. In den Figuren bezeichnen gleiche Bezugszeichen gleiche Teile.

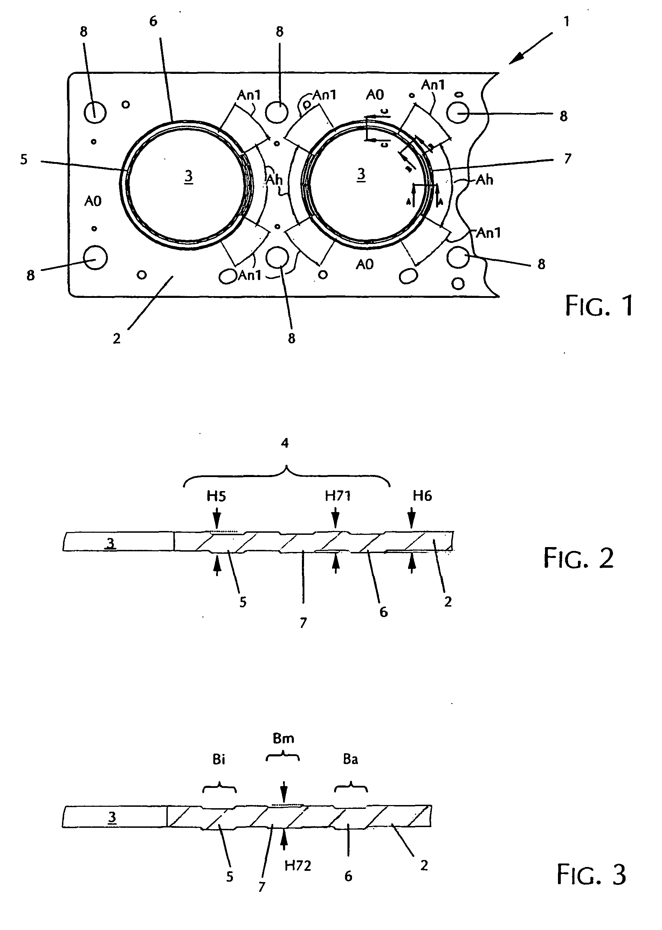

Fig. 1 zeigt eine Teildraufsicht auf ein erstes Beispiel einer erfindungsgemäßen Zylinderkopfdichtung. Die Zylinderkopfdichtung 1 ist in etwa in ihrer Hälfte geschnitten dargestellt und umfasst in ihrer einzigen Dichtungslage 2 insgesamt vier Brennraumöffnungen 3, deren Mittelpunkte sich in im Wesentlichen gleichem Abstand voneinander auf der Längsachse der Zylinderkopfdichtung 1 befinden. Dargestellt sind hier die zwei linken Brennraumöffnungen 3. Jede der Brennraumöffnungen 3 ist von 4 Öffnungen 8 umgeben, durch welche Befestigungsmittel wie Schrauben geführt werden, um die Zylinderkopfdichtung 1 zwischen Zylinderkopf und Motorblock einzuspannen. Außerdem sind in der Zylinderkopfdichtung Öffnungen für Wasser und Öl vorhanden, die hier jedoch nicht näher bezeichnet sind.

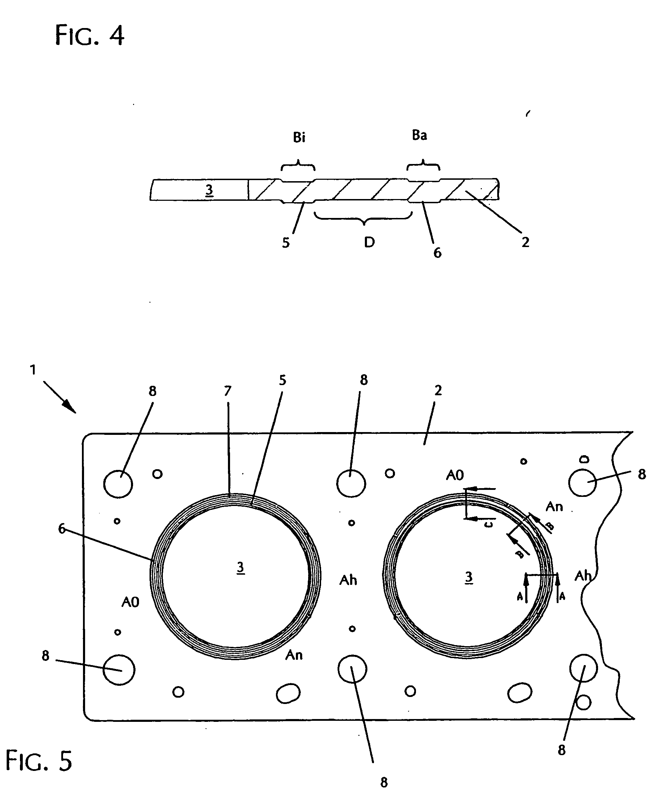

Jede der Brennraumöffnungen 3 wird von einem Abdichtbereich 4 eingeschlossen, in den drei konzentrisch um die Brennraumöffnung 3 umlaufende Sicken 5, 6 und 7 eingeprägt sind (Fig. 2 bis 4). Die innere Sicke 5 und die äußere Sicke 6 laufen jeweils kreisringförmig geschlossen um die Brennraumöffnung 3 um und besitzen in Umfangrichtung jeweils eine konstante Höhe H5 bzw. H6. H5 und H6 sind dabei gleich groß. Der radiale Abstand zwischen der inneren Sicke 5 und der äußeren Sicke 6 ist in Umfangsrichtung konstant. Im Bereich zwischen den Sicken 5 und 6 verläuft die mittlere Sicke 7. Deren Höhe ändert sich in Umfangsrichtung, wobei die maximale Höhe dieser Sicke nie höher ist als die Höhen H5 und H6.

In Umfangsrichtung der mittleren Sicke 7 wechseln sich Bereiche geringerer Höhe mit Bereichen größerer Höhe ab. Dies soll am Beispiel der in Figur 1 dargestellten rechten Durchgangsöffnung und der sie umgebenden Sicken näher erläutert werden. Diese rechte Durchgangsöffnung 3 ist an zwei Seiten von weiteren Brennraumöffnungen umgeben. Nach oben und unten in Figur 1 dagegen ist die Brennraumöffnung den Seitenrändern der Dichtung benachbart. In den Stegbereichen zu den benachbarten Brennraumöffnungen hin liegt die Zylinderkopfdichtung 1 auf Bereichen des Motorblocks auf, die eine relativ geringe Bauteilsteifigkeit besitzen. Dagegen ist die Bauteilsteifigkeit des Motorblocks zu den Längsseiten höher. Um diese geringe Bauteilsteifigkeit in den Stegbereichen zwischen benachbarten Brennraumöffnungen auszugleichen, muss hier für eine erhöhte Pressung gesorgt werden, damit in Umfangsrichtung um die Brennraumöffnung 3 herum eine gleichmäßige Pressung erzielt werden kann. Aus diesem Grund weist die mittlere Sicke 7 in den mit Ah gekennzeichneten Abschnitten eine größere Höhe H71 auf (Fig. 2) als in den übrigen Umfangsabschnittsbereichen. Die Höhenänderung der mittleren Sicke 7 geht dabei kontinuierlich vonstatten, und die Höhe sinkt im Übergangsbereich An1 (z.B. Höhe H72 bei B-B in Fig. 3), bis sie im Bereich A0 auf Null reduziert ist (Fig. 4). In diesem Bereich, wo die Zylinderkopfdichtung 1 auf demjenigen Bereich des Motorblocks mit der größten Bauteilsteifigkeit aufliegt, ist die mittlere Sicke 7 also gar nicht mehr vorhanden. Um die Brennraumöffnung 3 herum ergibt sich damit eine Abfolge von Sickenabschnitten unterschiedlicher Höhe Ah - An1 - A0 - An1 - Ah - An1 - A0 - An1-.

In der in Fig. 1 dargestellten rechten Brennraumöffnung 3, die von zwei benachbarten Brennraumöffnungen umgeben ist, sind zwei Bereiche Ah mit größter Sickenhöhe H71 vorhanden. Dies ist in den randseitigen Brennraumöffnungen nicht der Fall. Hier ist lediglich ein Abschnitt Ah mit größerer Höhe der mittlerer Sicke 7 vorhanden, nämlich benachbart zum Stegbereich zur nächsten Durchgangsöffnung. Auf der gegenüberliegenden Seite dagegen, benachbart zum Dichtungsrand fehlt die mittlere Sicke. Aufgrund des Fehlens einer benachbarten Durchgangsöffnung und eines verengten Stegbereichs findet der Sickenverbund hier einen Bereich erhöhter Bauteilsteifigkeit vor, der wiederum keine höhere Flächenpressung benötigt.

Die gleichmäßige Einstellung der Flächenpressung um die Brennraumöffnungen 3 herum erfolgt in diesem Beispiel nur über die Variation der Höhe der mittleren Sicke 7. Die Breiten Bi, Bm und Ba der Sicken bleiben dagegen in Umfangsrichtung konstant (vgl. Fig. 3 und 4). Fig. 4 verdeutlicht außerdem, dass die Breiten Bi und Ba, die im gezeigten Beispiel gleich groß sind, geringer sind als der Abstand D zwischen ihnen. Auf diese Weise kann der mittleren Sicke in den Abschnitten, wo sie vorhanden ist, ein hinreichend großer Arbeitsbereich bereitgestellt werden, der die Sickenfunktion nicht einschränkt.

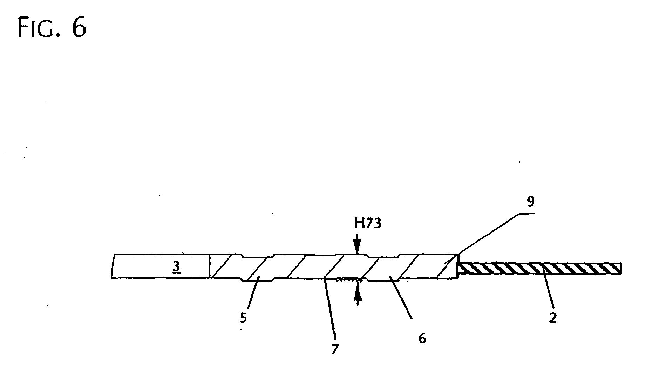

Fig. 5 zeigt die Draufsicht auf eine zweite Ausführungsform einer erfindungsgemäßen Zylinderkopfdichtung 1, welche im Wesentlichen derjenigen des ersten Ausführungsbeispiels entspricht. Es soll daher hier nur auf die Unterschiede zu dem ersten Ausführungsbeispiel eingegangen werden. Der wesentliche Unterschied besteht darin, dass die mittlere Sicke 7 in den Bereichen reduzierter Höhe nicht auf ein Höhe von Null zurückgeführt wird, sondern auf eine Höhe H73 und daher in allen Umfangsabschnitten vorhanden ist. Fig. 6 zeigt einen Bereich mit niedrigster Höhe der mittleren Sicke und gibt den Schnitt entlang der Linie C-C in Fig. 5 wieder. Die Schnitte entlang der Linien A-A und B-B entsprechen denjenigen in Fig. 2 und 3. Ein weiterer Unterschied besteht darin, dass der Abdichtbereich nicht in die Dichtungslage 2 eingeformt ist, sondern als separater Einlagering 9 gefertigt ist, der in eine entsprechend große Öffnung in der Dichtungslage 2 eingelegt und an der Dichtungslage verschweißt ist.

## Patentansprüche

1. Metallische Flachdichtung (1) mit wenigstens einer Dichtungslage (2), in der wenigstens eine Durchgangsöffnung (3) vorhanden ist, die von einem Abdichtbereich (4) umgeben ist, in dem Dichtelemente zum Abdichten der Durchgangsöffnung'(3) angeordnet sind,
**dadurch gekennzeichnet,**
**dass** der Abdichtbereich (4) als Dichtelemente umfasst:
- eine der Durchgangsöffnung (3) benachbarte, diese vollständig einschließende innere Sicke (5) mit einer in Umfangsrichtung im Wesentlichen konstanten Höhe,
- eine mit einem Abstand zur inneren Sicke (5) verlaufende, in sich geschlossene äußere Sicke (6) mit einer in Umfangsrichtung im Wesentlichen konstanten Höhe sowie
- eine zwischen der inneren Sicke (5) und der äußeren Sicke (6) verlaufende mittlere Sicke (7), deren Höhe sich in Umfangsrichtung ändert.

2. Metallische Flachdichtung nach Anspruch 1,
**dadurch gekennzeichnet,**
**dass** die Höhenänderung der mittleren Sicke (7) im Wesentlichen kontinuierlich verläuft.

3. Metallische Flachdichtung nach Anspruch 1 oder 2,
**dadurch gekennzeichnet,**
**dass** sich Abschnitte reduzierter Höhe (A0, An, An1) mit Abschnitten größerer Höhe (Ah) abwechseln.

4. Metallische Flachdichtung nach einem der Ansprüche 1 bis 3,
**dadurch gekennzeichnet,**
**dass** die mittlere Sicke (7) in wenigstens einem Umfangsabschnitt (A0) auf eine Höhe von Null reduziert ist.

5. Metallische Flachdichtung nach Anspruch 3 oder 4,
**dadurch gekennzeichnet,**
**dass** Abschnitte reduzierter Höhe (A0, An, An1) sich benachbart zu den die Durchgangsöffnung (3) umgebenden Öffnungen (8) für Befestigungsmittel befinden.

6. Metallische Flachdichtung nach einem der Ansprüche 1 bis 5,
**dadurch gekennzeichnet,**
**dass** die Dichtungslage (2) mehrere Durchgangsöffnungen (3) aufweist und im Bereich zwischen zwei benachbarten Durchgangsöffnungen (3) ein Abschnitt größerer Höhe (Ah) der mittleren Sicke (7) vorhanden ist.

7. Metallische Flachdichtung nach einem der Ansprüche 1 bis 6,
**dadurch gekennzeichnet,**
**dass** die Sicken wenigstens eine der folgenden Eigenschaften aufweisen:
- der Abstand (D) zwischen innerer Sicke (5) und äußerer Sicke (6) ist größer als die Breite (Bi, Ba) der jeweiligen Sicke,
- die innere Sicke (5) und die äußere Sicke (6) verlaufen im Wesentlichen konzentrisch zueinander,
- die innere Sicke (5) und die äußere Sicke (6) verlaufen in Umfangsrichtung mit im Wesentlichen konstantem Abstand (D) zueinander,
- die Breiten (Bi, Ba) von innerer Sicke (5) und/oder äußerer Sicke (6) sind in Umfangsrichtung im Wesentlichen konstant,
- die Breite (Bm) der mittleren Sicke (7) ist in Umfangsrichtung im Wesentlichen konstant,
- die maximale Höhe der mittleren Sicke (7) entspricht den Höhen der inneren Sicke (5) und der äußeren Sicke (6).

8. Metallische Flachdichtung nach einem der Ansprüche 1 bis 7,
**dadurch gekennzeichnet,**
**dass** der Abdichtbereich (4) als Einlagering (9) gefertigt ist.

9. Metallische Flachdichtung nach einem der Ansprüche 1 bis 8,
**dadurch gekennzeichnet,**
**dass** die Dichtungslage (2) und/oder der Einlagering (9) aus Kohlenstoffstahl oder Edelstahl besteht.

10. Metallische Flachdichtung nach einem der Ansprüche 1 bis 9,
**dadurch gekennzeichnet,**
**dass** das Material der Dichtungslage (2) und/oder des Einlagerings (9) eine Zugfestigkeit von 300 bis 750 N/mm² nach DIN EN 10002, Teil 1, besitzt.

11. Metallische Flachdichtung nach einem der Ansprüche 1 bis 10,
**dadurch gekennzeichnet,**
**dass** die Dichtungslage (2) oder der Einlagering (9) im Abdichtbereich (4) in den außerhalb der Sicken (5, 6, 7) gelegenen Bereiche eine im Wesentlichen konstante Dicke aufweist.

12. Metallische Flachdichtung nach einem der Ansprüche 1 bis 11,
**dadurch gekennzeichnet,**
**dass** sie wenigstens eine weitere Dichtungslage umfasst, die keine Dichtelemente zur Abdichtung der Durchgangsöffnung (3) enthält.

13. Metallische Flachdichtung einem der Ansprüche 1 bis 12, nämlich Zylinderkopfdichtung, in der die wenigstens eine Durchgangsöffnung (3) eine Brennraumöffnung ist.

## Claims

1. A metallic flat gasket (1), comprising at least one gasket layer (2) in which at least one through opening (3) is provided which is enclosed by a sealing area (4) in which the sealing elements are arranged for sealing the through opening (3),
**characterized in that**
the sealing area (4) comprises the following as sealing elements:
- an inner bead (5) which is adjacent to the through opening (3) and completely encloses the same, with a height which is substantially constant in the circumferential direction;
- an outer bead (6) which extends at a distance to the inner bead (5) and is inherently closed, with a height which is substantially constant in the circumferential direction, and
- a middle bead (7) which extends between the inner bead (5) and the outer bead (6) and whose height changes in the circumferential direction.

2. A metallic flat gasket according to claim 1, **characterized in that** the change of height of the middle bead (7) extends in a substantially continuous way.

3. A metallic flat gasket according to claim 1 or 2, **characterized in that** sections of reduced height (A0, An, An1) alternate with sections of larger height (Ah).

4. A metallic flat gasket according to one of the claims 1 to 3, **characterized in that** the middle bead (7) is reduced to a height of zero in at least one circumferential section (A0).

5. A metallic flat gasket according to claim 3 or 4, **characterized in that** the sections of reduced height (A0, An, An1) are located adjacent to the openings (8) for fastening means surrounding the through opening (3).

6. A metallic flat gasket according to one of the claims 1 to 5, **characterized in that** the gasket layer (2) comprises several through openings (3) and a section of larger height (Ah) of the middle bead (7) is present in the area between two adjacent through openings (3).

7. A metallic flat gasket according to one of the claims 1 to 6, **characterized in that** the beads have at least one of the following properties:
- the distance (D) between inner bead (5) and outer bead (6) is higher than the width (Bi, Ba) of the respective bead;
- the inner bead (5) and the outer bead (6) extend substantially concentrically with respect to each other;
- the inner bead (5) and the outer bead (6) extend in the circumferential direction with a substantially constant distance (D) with respect to each other;
- the widths (Bi, Ba) of the inner bead (5) and/or the outer bead (6) are substantially constant in the circumferential direction;
- the width (Bm) of the middle bead (7) is substantially constant in the circumferential direction;
- the maximum height of the middle bead (7) corresponds to the heights of the inner bead (5) and the outer bead (6).

8. A metallic flat gasket according to one of the claims 1 to 7, **characterized in that** the sealing area (4) is arranged as an insert ring (9).

9. A metallic flat gasket according to one of the claims 1 to 8, **characterized in that** the gasket layer (2) and/or the insert ring (9) consist of carbon steel or special steel.

10. A metallic flat gasket according to one of the claims 1 to 9, **characterized in that** the material of the gasket layer (2) and/or the insert ring (9) have a tensile strength of 300 to 750 N/mm² according to DIN EN 10002, part 1.

11. A metallic flat gasket according to one of the claims 1 to 10, **characterized in that** the gasket layer (2) or the insert ring (9) has a substantially constant thickness in the sealing area (4) in the sections situated outside of the beads (5, 6, 7).

12. A metallic flat gasket according to one of the claims 1 to 11, **characterized in that** it comprises at least one further gasket layer which does not contain any sealing elements for sealing the through opening (3).

13. A metallic flat gasket according to one of the claims 1 to 12, namely a cylinder head gasket in which the at least one through opening (3) is a combustion chamber opening.

## Revendications

1. Joint plat métallique (1) ayant au moins une couche d'étanchéité (2), dans laquelle il existe au moins une ouverture de passage (3) entourée par une zone d'étanchéité (4) dans laquelle sont disposés des éléments d'étanchéité destinés à assurer l'étanchéité de l'ouverture de passage (3), **caractérisé en ce que** la zone d'étanchéité (4) comporte, comme éléments d'étanchéité :
- une moulure intérieure (5) voisine de l'ouverture de passage (3) et entourant complètement celle-ci, ayant une hauteur sensiblement constante dans le sens de la circonférence,
- une moulure extérieure (6) distante de la moulure intérieure (5) et fermée, ayant une hauteur sensiblement constante dans le sens de la circonférence, et
- une moulure intermédiaire (7) disposée entre la moulure intérieure (5) et la moulure extérieure (6), dont la hauteur change dans le sens de la circonférence.

2. Joint plat métallique selon la revendication 1, **caractérisé en ce que** le changement de hauteur de la moulure intermédiaire (7) s'effectue de façon sensiblement continue.

3. Joint plat métallique selon la revendication 1 ou 2, **caractérisé en ce que** des segments de hauteur réduite (A0, An, An1) alternent avec des segments de plus grande hauteur (Ah).

4. Joint plat métallique selon l'une des revendications 1 à 3, **caractérisé en ce que** la moulure intermédiaire (7) est réduite à une hauteur nulle dans au moins un segment de circonférence (A0).

5. Joint plat métallique selon la revendication 3 ou 4, **caractérisé en ce que** les segments de hauteur réduite (A0, An, An1) sont voisins d'ouvertures (8) entourant l'ouverture de passage (3) et destinées à des moyens de fixation.

6. Joint plat métallique selon l'une des revendications 1 à 5, **caractérisé en ce que** la couche d'étanchéité (2) comporte plusieurs ouvertures de passage (3) et il est prévu entre deux ouvertures de passage (3) voisines un segment de plus grande hauteur (Ah) de la moulure intermédiaire (7).

7. Joint plat métallique selon l'une des revendications 1 à 6, **caractérisé en ce que** les moulures ont au moins une des caractéristiques suivantes :
- la distance (D) entre la moulure intérieure (5) et la moulure extérieure (6) est plus grande que la largeur (Bi, Ba) de chaque moulure,
- la moulure intérieure (5) et la moulure extérieure (6) sont sensiblement concentriques l'une par rapport à l'autre,
- la moulure intérieure (5) et la moulure extérieure (6) ont une distance (D) sensiblement constante l'une par rapport à l'autre dans le sens de la circonférence,
- la largeur (Bi, Ba) de la moulure intérieure (5) et/ou de la moulure extérieure (6) est sensiblement constante dans le sens de la circonférence,
- la largeur (Bm) de la moulure intermédiaire (7) est sensiblement constante dans le sens de la circonférence,
- la hauteur maximale de la moulure intermédiaire (7) correspond à la hauteur de la moulure intérieure (5) et de la moulure extérieure (6).

8. Joint plat métallique selon l'une des revendications 1 à 7, **caractérisé en ce que** la zone d'étanchéité (4) est fabriquée comme un anneau inséré (9).

9. Joint plat métallique selon l'une des revendications 1 à 8, **caractérisé en ce que** la couche d'étanchéité (2) et/ou l'anneau inséré (9) sont fabriqués en acier au carbone ou en acier inoxydable.

10. Joint plat métallique selon l'une des revendications 1 à 9, **caractérisé en ce que** le matériau de la couche d'étanchéité (2) et/ou de l'anneau inséré (9) a une résistance à la traction de 300 à 750 N/mm² selon DIN EN 10002, Partie 1.

11. Joint plat métallique selon l'une des revendications 1 à 10, **caractérisé en ce que** la couche d'étanchéité (2) ou l'anneau inséré (9) a une épaisseur sensiblement constante dans la zone d'étanchéité (4) dans les parties situées en dehors des moulures (5, 6, 7).

12. Joint plat métallique selon l'une des revendications 1 à 11, **caractérisé en ce qu'**il comprend au moins une autre couche d'étanchéité qui ne contient pas d'éléments d'étanchéité pour l'étanchéité de l'ouverture de passage (3).

13. Joint plat métallique selon l'une des revendications 1 à 12, à savoir joint pour culasse de cylindre, dans lequel l'ouverture de passage (3) au nombre d'une au moins est une ouverture de chambre de combustion.
